# EUROPEAN PATENT SPECIFICATION

(11) **EP 3 038 423 B1**
(45) Date of publication and mention of the grant of the patent: **30.05.2018**
(21) Application number: 14848340.7
(22) Date of filing: 24.09.2014
(51) Int. Cl.: H04B 7/06, H04B 7/08, H04W 88/08, H01Q 1/24

(54) **ANTENNA SYSTEM AND PROCESSING METHOD**
ANTENNENSYSTEM UND VERARBEITUNGSVERFAHREN
SYSTÈME D'ANTENNE ET PROCÉDÉ DE TRAITEMENT

(30) Priority: 24.09.2013 CN 201310439135
(43) Date of publication of application: 29.06.2016
(73) Proprietor: Huawei Technologies Co., Ltd., Longgang District Shenzhen, Guangdong 518129 (CN)
(72) Inventor: ZHAO, Jianping, Shenzhen Guangdong 518129 (CN); WANG, Linlin, Shenzhen Guangdong 518129 (CN); YANG, Chaohui, Shenzhen Guangdong 518129 (CN)
(74) Representative: Körber, Martin Hans
(86) International application number: PCT/CN2014/087277
(87) International publication number: WO 2015/043469

(56) References cited:
- EP-A1- 2 264 913
- EP-A1- 2 632 058
- WO-A1-2010/135862
- CN-A- 101 426 303
- CN-A- 102 157 791
- CN-A- 103 222 299
- CN-A- 103 491 638
- US-A1- 2011 201 268

## Description

### TECHNICAL FIELD

The present invention relates to the field of wireless communications technologies, and in particular, to an antenna system and a processing method.

### BACKGROUND

With the rapid development of wireless communications technologies, people constantly propose higher requirements on a capacity and a data transfer rate of a communications system. At present, macro base stations use an ICIC (inter-cell interference coordination) technology. When a base station transmitting at full power causes interference to a user in a neighboring cell, inter-base station scheduling information coordination is performed, so that a near-end user and a far-end user within two base stations use a same wireless resource, and transmit power of a base station to which the near-end user belongs on the wireless resource is reduced, thereby reducing interference between cells, and improving signal quality and data throughput of a cell edge user.

However, using the ICIC technology to improve the signal quality of the edge user causes degradation in signal quality of the near-end user of the base station, and therefore causes a reduction in average throughput of the entire cell. Therefore, the capacity of the communications system encounters a bottleneck.

CN 103 222 299 A provides a downlink direction remote radio unit RRU selection decision method and apparatus; so as to timely switch an RRU transmission mode and select a suitable RRU to transmit a downlink carrier signal, thereby reducing network interference and RRU power consumption. The method includes: an RRU selection decision cycle of a current RRU shared cell arriving; and determining, according to a current downlink measurement item of a user terminal and an uplink measurement item of each RRU, that at least one RRU among the RRUs transmits a downlink carrier signal; or, determining, according to the current downlink measurement item of the user terminal, the uplink measurement item of each RRU, and power specification of each RRU, that at least one RRU among the RRUs transmits a downlink carrier signal, where a downlink channel includes: a traffic channel and a stand-alone dedicated control channel.

US 2011/0201268 A1 discloses a communication system, apparatus and method, and the communication system includes: a base band unit (BBU), at least two antennas and at least two radio-frequency (RF) units, where the at least two RF units are connected with the BBU respectively; and each of the antennas is connected with at least two RF units respectively, so that a signal received from a same sector by an antenna is sent to the BBU via different RF units. By cross-connections of the channel of the RF units with the feeder lines of the antennas, the service data for a single sector is distributively processed via the channels of different RF units by virtue of the independence of at least two transceiving channels. This may improve the reliability of the base station since the failure of a single RF unit will not result in service interruption of the whole sector. By the reliability estimation, the reliability of the RF units may be improved without increasing the hardware cost of the base station.

EP 2 632 058 A1 relates to an apparatus for providing a composite beampattem for at least two antenna elements coupled to at least two signal branches of a signal, the composite beampattern having at least two main lobes pointing in different spatial directions, the apparatus comprising means for forming the composite beampattem for the signal by superimposing at least two individual beampatterns provided by the at least two antenna elements, wherein each of at least two individual beampatterns has a main lobe, wherein the at least two main lobes of the at least two individual beampatterns point in different spatial directions, respectively.

EP 2 264 913 A1 describes a base transceiver station and an associated method for the communication between the base transceiver station and user equipments.

### SUMMARY

Embodiments of the present invention provide an antenna system and a processing method, which can increase a capacity of a communications system.

The present invention is defined in the independent claims. Preferred embodiments are defined in the dependent claims.

Based on the foregoing technical solutions, the antenna system in the embodiments of the present invention can flexibly select, according to the quality of the channel between the first antenna and the terminal and the quality of the channel between the second antenna and the terminal, to use the first antenna and/or the second antenna to transmit a signal to the terminal and/or receive a signal transmitted by the terminal, thereby increasing a capacity of a communications system.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of an antenna system according to an embodiment of the present invention;
FIG. 2 is a schematic diagram of a coverage range of an antenna system according to an embodiment of the present invention;
FIG. 3 is a schematic diagram of a coverage range of another antenna system according to an embodiment of the present invention;
FIG. 4 is a schematic flowchart of a processing method for an antenna system according to an embodiment of the present invention; and
FIG. 5 is a schematic block diagram of another antenna system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as a global system of mobile communications ("GSM" for short) system, a code division multiple access ("CDMA" for short) system, a wideband code division multiple access ("WCDMA" for short) system, a general packet radio service ("GPRS" for short) system, a long term evolution ("LTE" for short) system, an LTE frequency division duplex ("FDD" for short) system, an LTE time division duplex ("TDD" for short) system, a universal mobile telecommunications system ("UMTS" for short), a worldwide interoperability for microwave access ("WiMAX" for short) communications system and the like.

It should also be understood that in the embodiments of the present invention, a terminal may also be referred to as user equipment ("UE" for short), a mobile station ("MS" for short), a mobile terminal, and the like. The terminal may communicate with one or more core networks through a radio access network ("RAN" for short). For example, the terminal may be a mobile phone (also referred to as a "cellular" phone) or a computer with a mobile terminal. For example, the terminal may also be a portable, pocket-sized, handheld, computer built-in, or in-vehicle mobile apparatus, which exchanges voice and/or data with the radio access network. The present invention sets no limitation thereto; however, for ease of description, the following embodiments use a terminal as an example for description.

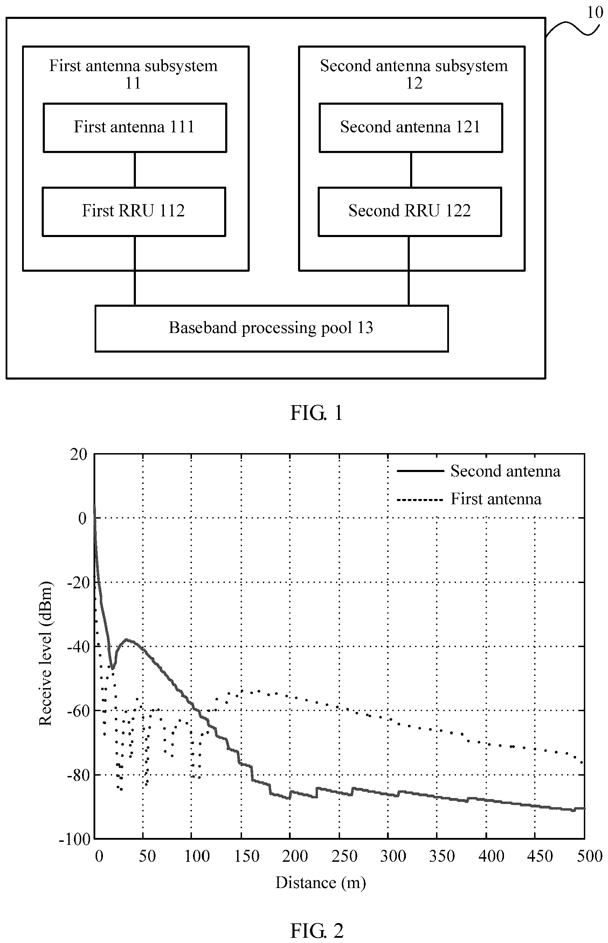

FIG. 1 is a schematic block diagram of an antenna system according to an embodiment of the present invention. The antenna system 10 in FIG. 1 includes a first antenna subsystem 11, a second antenna subsystem 12, and a baseband processing pool 13.

The first antenna subsystem 11 includes a first antenna 111 and a first remote radio unit RRU 112, where the first antenna 111 is connected to the first RRU 112 by using a feeder.

The second antenna subsystem 12 includes a second antenna 121 and a second RRU 122, where the second antenna 121 is connected to the second RRU 122 by using a feeder, a vertical beam width of the second antenna 121 is greater than a vertical beam width of the first antenna 111, a downtilt angle of the second antenna 121 is greater than a downtilt angle of the first antenna 111, and the second antenna 121 and the first antenna 111 transmit and/or receive signals by using a carrier of same frequency.

The baseband processing pool 13 is separately connected to the first RRU 112 and the second RRU 122 by using cables, and is configured to determine, according to quality of a channel between the first antenna 111 and a terminal and quality of a channel between the second antenna 121 and the terminal, to use the first antenna 111 and/or the second antenna 121 to transmit a signal to the terminal and/or receive a signal transmitted by the terminal.

Based on the foregoing technical solution, the antenna system in this embodiment of the present invention can flexibly select, according to the quality of the channel between the first antenna and the terminal and the quality of the channel between the second antenna and the terminal, to use the first antenna and/or the second antenna to transmit a signal to the terminal and/or receive a signal transmitted by the terminal, thereby increasing a capacity of a communications system.

The first antenna 111 is mainly configured for wide area coverage. The second antenna 121, whose vertical beam width is greater than the vertical beam width of the first antenna 111, has a small volume and a low gain, and is mainly configured for signal enhancement in a near-end area of a base station. The baseband processing pool 13 flexibly selects, according to the quality of the channel between the first antenna 111 and the terminal and the quality of the channel between the second antenna 121 and the terminal, to use the first antenna 111 and/or the second antenna 121 to transmit a signal to the terminal. In this way, both cell-edge throughput and average cell throughput can be increased, thereby increasing a capacity of a communications system. Moreover, the second antenna 121 has a small volume and a low gain, which reduces networking costs. In addition, in collaboration with the second antenna 121, the first antenna 111 can reduce transmit power, thereby reducing power consumption and increasing the average cell throughput.

It should be understood that, the second antenna subsystem 12 includes multiple second antennas 121 and a corresponding quantity of second RRUs 122. For example, when the second RRUs 122 are single-channel RRUs, a quantity of the second RRUs 122 is the same as a quantity of the second antennas 121; when the second RRUs 122 are dual-channel RRUs, a quantity of the second RRUs 122 is half a quantity of the second antennas 121, which is not limited in this embodiment of the present invention. Each of the second antennas 121 can collaborate with the first antenna 111, to achieve a beneficial effect of improving both the cell-edge throughput and the average cell throughput. A collaboration manner of the first antenna 111 and each of the second antennas 121 is described above, and to avoid repetition, details are not described again.

Optionally, as an embodiment, the baseband processing pool 13 is further configured to determine the quality of the channel between the first antenna 111 and the terminal and the quality of the channel between the second antenna 121 and the terminal according to an uplink signal transmitted by the terminal and received by the first antenna 111 and an uplink signal transmitted by the terminal and received by the second antenna 121.

Optionally, as another embodiment, the baseband processing pool 13 is further configured to determine the quality of the channel between the first antenna 111 and the terminal according to channel quality measurement information of the first antenna 111 transmitted by the terminal, and determine the quality of the channel between the second antenna 121 and the terminal according to channel quality measurement information of the second antenna 121 transmitted by the terminal.

Optionally, as another embodiment, the baseband processing pool 13 is further configured to select, according to the quality of the channel between the first antenna 111 and the terminal and the quality of the channel between the second antenna 121 and the terminal, the antenna with higher channel quality from the first antenna 111 and the second antenna 121 to transmit a signal to the terminal, or determine to use the first antenna 111 and the second antenna 121 collaboratively to transmit a signal to the terminal and/or receive a signal transmitted by the terminal.

For example, when determining that a difference between the channel quality of the first antenna 111 and the channel quality of the second antenna 121 is greater than a preset threshold, the baseband processing pool 13 selects an antenna with relatively high channel quality to transmit a signal to the terminal and/or receive a signal transmitted by the terminal. Alternatively, when determining that a difference between the channel quality of the first antenna 111 and the channel quality of the second antenna 121 is less than a preset threshold, the baseband processing pool 13 determines to use the first antenna 111 and the second antenna 121 collaboratively to transmit a signal to the terminal and/or receive a signal transmitted by the terminal.

With reference to specific examples, the following describes working principles of the antenna system 10 in this embodiment of the present invention in detail. It should be noted that, these examples are merely intended to help a person skilled in the art better understand this embodiment of the present invention, and are not intended to limit the scope of this embodiment of the present invention.

When the antenna system 10 is applied to a time division duplex communications system, the first antenna 111 and the second antenna 121 may each receive an uplink signal transmitted by the terminal, and transmit the received uplink signal though a cable to the baseband processing pool 13. The baseband processing pool 13 is configured to calculate, according to the received uplink signal, the quality of the channel between the first antenna 111 and the terminal and the quality of the channel between the second antenna 121 and the terminal. Due to reciprocity of uplink and downlink channels in the time division duplex communications system, the baseband processing pool 13 may select, according to the channel quality of the first antenna 111 and the channel quality of the second antenna 121, an antenna used to transmit a signal to the terminal and/or receive a signal transmitted by the terminal.

Specifically, the baseband processing pool 13 may select an antenna with relatively high channel quality to transmit a signal to the terminal and/or receive a signal transmitted by the terminal; in this way, interference to a neighboring cell can be reduced, thereby increasing average throughput of cells in the communications system. Alternatively, the baseband processing pool 13 determines to use the first antenna 111 and the second antenna 121 collaboratively to transmit a signal to the terminal and/or receive a signal transmitted by the terminal.

Parameters such as a downtilt angle may be adjusted so that a coverage area of the first antenna 111 and a coverage area of the second antenna 121 complement each other, where the first antenna 111 is mainly configured to cover a far-end area of the base station, and the second antenna 121 is mainly configured to cover a near-end area of the base station. Similarly, the parameters such as a downtilt angle may also be adjusted so that a coverage range of the first antenna includes a coverage range of the second antenna 121, where the first antenna 111 is mainly configured to cover a wide area, and the second antenna 121 is mainly configured to cover a near-end area of the base station.

A coverage area of an antenna is defined in the sense of comparison. A level of a signal transmitted by the first antenna 111 is compared with a level of a signal transmitted by the second antenna 121, an area in which signal strength of the first antenna 111 is greater is referred to as the coverage area of the first antenna 111, and an area in which signal strength of the second antenna 121 is greater is referred to as the coverage area of the second antenna 121.

FIG. 2 is a schematic diagram of a coverage range of an antenna system according to an embodiment of the present invention. As shown in FIG. 2, a horizontal coordinate represents a distance from a base station, and a vertical coordinate represents a level of a signal transmitted by an antenna. Within a range of 0 m to 111 m away from the base station, strength of a signal transmitted by a second antenna 121 is greater than strength of a signal transmitted by a first antenna 111, and the range belongs to a coverage range of the second antenna 121. Within a range of 111 m to 500 m away from the base station, strength of a signal transmitted by the first antenna 111 is greater than strength of a signal transmitted by the second antenna 121, and the range belongs to a coverage range of the first antenna 111. The coverage range of the first antenna 111 and the coverage range of the second antenna 121 complement each other.

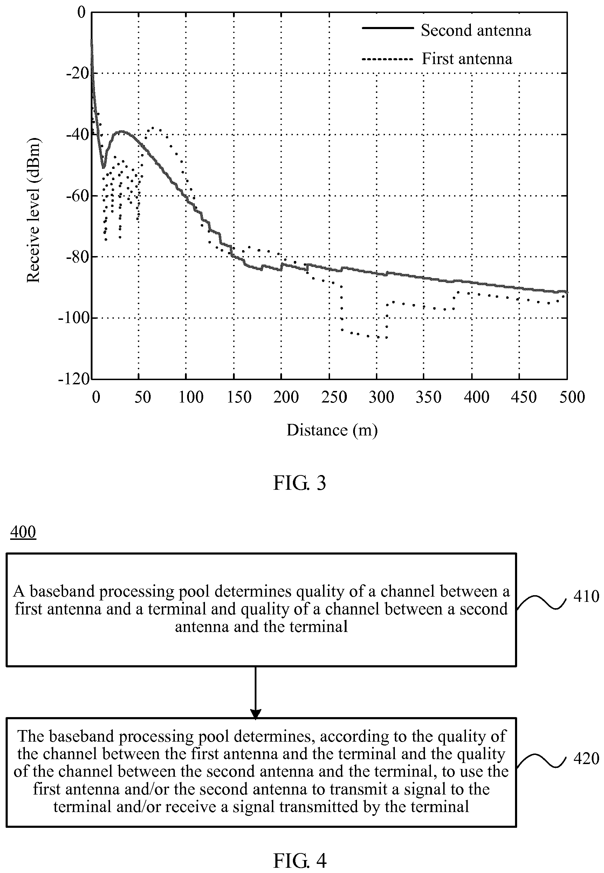

FIG. 3 is a schematic diagram of a coverage range of another antenna system according to an embodiment of the present invention. As shown in FIG. 3, a horizontal coordinate represents a distance from a base station, and a vertical coordinate represents a level of a signal transmitted by an antenna. Within a range of 0 m to 500 m away from the base station, a difference between a level of a signal transmitted by a first antenna 111 and a level of a signal transmitted by a second antenna 121 is not large, and a coverage range of the first antenna 111 includes a coverage range of the second antenna 121.

When the coverage range of the first antenna 111 and the coverage range of the second antenna 121 complement each other, a baseband processing pool 13 generally determines through measurement that a difference between channel quality of the first antenna 111 and channel quality of the second antenna 121 is relatively large, or the difference exceeds a preset threshold. Therefore, the baseband processing pool 13 selects an antenna with relatively high channel quality to transmit a signal to the terminal and/or receive a signal transmitted by the terminal. In this case, during communication with the terminal, independent cell identifiers may be configured for the first antenna 111 and the second antenna 121 (when there are multiple second antennas 121, independent cell identifiers are also configured for the second antennas 121), or a same cell identifier may be configured for the first antenna 111 and the second antenna 121.

When the coverage range of the first antenna 111 includes the coverage range of the second antenna 121, the baseband processing pool 13 generally determines through measurement that a difference between the channel quality of the first antenna 111 and the channel quality of the second antenna 121 is relatively small, or the difference is less than a preset threshold. If the baseband processing pool 13 selects to use the first antenna 111 and the second antenna 121 collaboratively to transmit a signal to the terminal and/or receive a signal transmitted by the terminal, a same cell identifier needs to be configured for the first antenna 111 and the second antenna 121, which simultaneously transmit a cell-level public control signal in a manner of a system frame number. If the baseband processing pool 13 selects one antenna from the first antenna 111 and the second antenna 121 to transmit a signal to the terminal, a same cell identifier is configured for the first antenna 111 and the second antenna 121, but only one antenna performs signal transmission.

Optionally, as another embodiment, transmit power of the second antenna 121 is less than transmit power of the first antenna 111. In this case, in this embodiment of the present invention, the first antenna 111 and the second antenna 121 collaborate with each other, and the transmit power of the second antenna 121 is set to be less than the transmit power of the first antenna 111, thereby further reducing power consumption of the base station.

Optionally, as another embodiment, the baseband processing pool includes a first interface, and is configured to acquire time-frequency resource information of an antenna system of a neighboring cell by using the first interface, where the time-frequency resource information is information about a time-frequency resource used when a third antenna and/or a fourth antenna of the antenna system of the neighboring cell transmits and/or receives a signal.

For example, in the case of single-frequency networking, the antenna system of the cell may periodically acquire, by using the first interface, information about a time-frequency resource used by the antenna system of the neighboring cell. Generally, the first interface is directly connected to the base station, and the base station is connected to other base stations by using cables, thereby implementing exchange of time-frequency resource information. In this way, the first antenna (an antenna corresponding to far-end coverage) of the cell can preferentially use a time-frequency resource that is used by the fourth antenna of the neighboring cell (an antenna corresponding to near-end coverage), and the second antenna (an antenna corresponding to near-end coverage) of the cell can preferentially use a time-frequency resource that is used by the third antenna (an antenna corresponding to far-end coverage) of the neighboring cell, thereby reducing interference between cells, and further increasing a capacity of a communications system.

Optionally, as another embodiment, the first antenna subsystem and the second antenna subsystem share a radome. In this way, networking costs can be further reduced.

Optionally, the antenna system 10 in this embodiment of the present invention may be implemented by adding a second antenna subsystem 12 to an existing antenna system, or the antenna system 10 in this embodiment of the present invention may be set up by pre-calculating a network capacity required by neighboring areas when network planning is performed for a new base station.

FIG. 4 is a schematic flowchart of a processing method for an antenna system according to an embodiment of the present invention. The method 400 may be executed by an antenna system 10.

410: A baseband processing pool determines quality of a channel between a first antenna and a terminal and quality of a channel between a second antenna and the terminal.

420: The baseband processing pool determines, according to the quality of the channel between the first antenna and the terminal and the quality of the channel between the second antenna and the terminal, to use the first antenna and/or the second antenna to transmit a signal to the terminal and/or receive a signal transmitted by the terminal.

Based on the foregoing technical solution, the antenna system in this embodiment of the present invention can flexibly select, according to the quality of the channel between the first antenna and the terminal and the quality of the channel between the second antenna and the terminal, to use the first antenna and/or the second antenna to transmit a signal to the terminal and/or receive a signal transmitted by the terminal, thereby increasing a capacity of a communications system.

The first antenna is mainly configured for wide area coverage. The second antenna, whose vertical beam width is greater than a vertical beam width of the first antenna, has a small volume and a low gain, and is mainly configured for signal enhancement in a near-end area of a base station. The baseband processing pool flexibly selects, according to the quality of the channel between the first antenna and the terminal and the quality of the channel between the second antenna and the terminal, to use the first antenna and/or the second antenna to transmit a signal to the terminal. In this way, both cell-edge throughput and average cell throughput can be increased, thereby increasing a capacity of a communications system. Moreover, the second antenna has a small volume and a low gain, which reduces networking costs. In addition, in collaboration with the second antenna, the first antenna can reduce transmit power, thereby reducing power consumption and increasing the average cell throughput.

It should be understood that, the second antenna subsystem may include multiple second antennas and a corresponding quantity of second RRUs. For example, when the second RRUs are single-channel RRUs, a quantity of the second RRUs is the same as a quantity of the second antennas; when the second RRUs are dual-channel RRUs, a quantity of the second RRUs is half a quantity of the second antennas, which is not limited in this embodiment of the present invention. Each of the second antennas can collaborate with the first antenna, to achieve a beneficial effect of improving both the cell-edge throughput and the average cell throughput. A collaboration manner of the first antenna and each of the second antennas is described above, and to avoid repetition, details are not described again.

Optionally, as an embodiment, in step 410, the baseband processing pool determines the quality of the channel between the first antenna and the terminal and the quality of the channel between the second antenna and the terminal according to an uplink signal transmitted by the terminal and received by the first antenna and an uplink signal transmitted by the terminal and received by the second antenna.

Optionally, as another embodiment, in step 410, the baseband processing pool determines the quality of the channel between the first antenna and the terminal according to channel quality measurement information of the first antenna transmitted by the terminal, and determines the quality of the channel between the second antenna and the terminal according to channel quality measurement information of the second antenna transmitted by the terminal.

Optionally, as another embodiment, in step 420, the baseband processing pool selects, according to the quality of the channel between the first antenna and the terminal and the quality of the channel between the second antenna and the terminal, the antenna with higher channel quality from the first antenna and the second antenna to transmit a signal to the terminal and/or receive a signal transmitted by the terminal, or determines to use the first antenna and the second antenna to transmit a signal to the terminal and/or receive a signal transmitted by the terminal.

Optionally, as another embodiment, when a difference between the channel quality of the first antenna and the channel quality of the second antenna is greater than a threshold, the antenna with higher channel quality is selected from the first antenna and the second antenna to transmit a signal to the terminal and/or receive a signal transmitted by the terminal.

Optionally, as another embodiment, when a difference between the channel quality of the first antenna and the channel quality of the second antenna is less than a threshold, it is determined that the first antenna and the second antenna are used collaboratively to transmit a signal to the terminal and/or receive a signal transmitted by the terminal.

With reference to specific examples, the following describes the processing method for the antenna system in this embodiment of the present invention in detail. It should be noted that, these examples are merely intended to help a person skilled in the art better understand this embodiment of the present invention, and are not intended to limit the scope of this embodiment of the present invention.

When the antenna system is applied to a time division duplex communications system, the first antenna and the second antenna may each receive an uplink signal transmitted by the terminal, and transmit the received uplink signal though a cable to the baseband processing pool. The baseband processing pool is configured to calculate, according to the received uplink signal, the quality of the channel between the first antenna and the terminal and the quality of the channel between the second antenna and the terminal. Due to reciprocity of uplink and downlink channels in the time division duplex communications system, the baseband processing pool may select, according to the channel quality of the first antenna and the channel quality of the second antenna, an antenna used to transmit a signal to the terminal and/or receive a signal transmitted by the terminal.

Specifically, the baseband processing pool may select an antenna with relatively high channel quality to transmit a signal to the terminal; in this way, interference to a neighboring cell can be reduced, thereby increasing average throughput of cells in the communications system. Alternatively, the baseband processing pool determines to use the first antenna and the second antenna collaboratively to transmit a signal to the terminal and/or receive a signal transmitted by the terminal.

Parameters such as a downtilt angle may be adjusted so that a coverage area of the first antenna and a coverage area of the second antenna complement each other, where the first antenna is mainly configured to cover a far-end area of the base station, and the second antenna is mainly configured to cover a near-end area of the base station. Similarly, the parameters such as a downtilt angle may also be adjusted so that a coverage range of the first antenna includes a coverage range of the second antenna, where the first antenna is mainly configured to cover a wide area, and the second antenna is mainly configured to cover a near-end area of the base station.

When the coverage range of the first antenna and the coverage range of the second antenna complement each other, the baseband processing pool generally determines through measurement that a difference between the channel quality of the first antenna and the channel quality of the second antenna is relatively large, or the difference exceeds a preset threshold. Therefore, the baseband processing pool selects an antenna with relatively high channel quality to transmit a signal to the terminal and/or receive a signal transmitted by the terminal. In this case, during communication with the terminal, independent cell identifiers may be configured for the first antenna and the second antenna (when there are multiple second antennas, independent cell identifiers are also configured for the second antennas), or a same cell identifier may be configured for the first antenna and the second antenna.

When the coverage range of the first antenna includes the coverage range of the second antenna, the baseband processing pool generally determines through measurement that a difference between the channel quality of the first antenna and the channel quality of the second antenna is relatively small, or the difference is less than a preset threshold. If the baseband processing pool selects to use the first antenna and the second antenna collaboratively to transmit a signal to the terminal and/or receive a signal transmitted by the terminal, a same cell identifier needs to be configured for the first antenna and the second antenna, which simultaneously transmit a cell-level public control signal in a manner of a system frame number. If the baseband processing pool selects one antenna from the first antenna and the second antenna to transmit a signal to the terminal and/or receive a signal transmitted by the terminal, a same cell identifier is configured for the first antenna and the second antenna, but only one antenna performs signal transmission.

Optionally, as another embodiment, the baseband processing pool acquires time-frequency resource information of an antenna system of a neighboring cell, where the time-frequency resource information is information about a time-frequency resource used when a third antenna and/or a fourth antenna of the antenna system of the neighboring cell transmits and/or receives a signal; and the baseband processing pool determines, according to the time-frequency resource information, a time-frequency resource preferentially used when the first antenna and/or the second antenna of the antenna system transmits and/or receives a signal.

For example, in the case of single-frequency networking, the antenna system of the cell may periodically acquire, by using a first interface, information about a time-frequency resource used by the antenna system of the neighboring cell. Generally, the first interface is directly connected to the base station, and the base station is connected to other base stations by using cables, thereby implementing exchange of time-frequency resource information. In this way, the first antenna (an antenna corresponding to far-end coverage) of the cell can preferentially use a time-frequency resource that is used by the fourth antenna of the neighboring cell (an antenna corresponding to near-end coverage), and the second antenna (an antenna corresponding to near-end coverage) of the cell can preferentially use a time-frequency resource that is used by the third antenna (an antenna corresponding to far-end coverage) of the neighboring cell, thereby reducing interference between cells, and further increasing a capacity of a communications system.

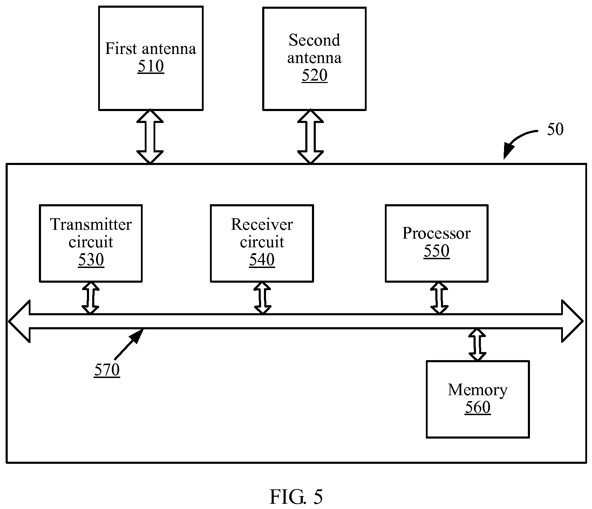

FIG. 5 is a schematic block diagram of another antenna system according to an embodiment of the present invention.

The antenna system 50 in FIG. 5 can be used to implement the steps and methods in the foregoing method embodiments. The antenna system 50 can be applied to base stations in various communications systems. In the embodiment in FIG. 5, the antenna system 50 includes a first antenna 510, a second antenna 520, a transmitter circuit 530, a receiver circuit 540, a processor 550, and a memory 560. The processor 550 controls an operation of the antenna system 50, and can be used to process a signal. The memory 560 may include a read-only memory and a random access memory, and provide an instruction and data to the processor 550. The transmitter circuit 530 and the receiver circuit 540 may be coupled to the first antenna 510 and the second antenna 520. Components of the antenna system 50 are coupled together by using a bus system 570, where in addition to a data bus, the bus system 570 also includes a power bus, a control bus, and a status signal bus. However, for clear description, various types of buses in the figure are marked as the bus system 570.

Specifically, the memory 560 may store an instruction for enabling the processor 550 to execute the following procedure:
determining quality of a channel between the first antenna and a terminal and quality of a channel between the second antenna and the terminal; and determining, according to the quality of the channel between the first antenna and the terminal and the quality of the channel between the second antenna and the terminal, to use the first antenna and/or the second antenna to transmit a signal to the terminal and/or receive a signal transmitted by the terminal.

Based on the foregoing technical solution, the antenna system in this embodiment of the present invention can flexibly select, according to the quality of the channel between the first antenna and the terminal and the quality of the channel between the second antenna and the terminal, to use the first antenna and/or the second antenna to transmit a signal to the terminal and/or receive a signal transmitted by the terminal, thereby increasing a capacity of a communications system.

The first antenna 510 is mainly configured for wide area coverage. The second antenna 520, whose vertical beam width is greater than a vertical beam width of the first antenna 510, has a small volume and a low gain, and is mainly configured for signal enhancement in a near-end area of a base station. The processor 550 flexibly selects, according to the quality of the channel between the first antenna 510 and the terminal and the quality of the channel between the second antenna 520 and the terminal, to use the first antenna 510 and/or the second antenna 520 to transmit a signal to the terminal. In this way, both cell-edge throughput and average cell throughput can be increased, thereby increasing a capacity of a communications system. Moreover, the second antenna 520 has a small volume and a low gain, which reduces networking costs. In addition, in collaboration with the second antenna 520, the first antenna 510 can reduce transmit power, thereby reducing power consumption and increasing the average cell throughput.

Optionally, as another embodiment, the memory 560 may further store an instruction for enabling the processor 550 to execute the following procedure:
determining the quality of the channel between the first antenna and the terminal and the quality of the channel between the second antenna and the terminal according to an uplink signal transmitted by the terminal and received by the first antenna and an uplink signal transmitted by the terminal and received by the second antenna.

Optionally, as another embodiment, the memory 560 may further store an instruction for enabling the processor 550 to execute the following procedure:
determining the quality of the channel between the first antenna and the terminal according to channel quality measurement information of the first antenna transmitted by the terminal, and determining the quality of the channel between the second antenna and the terminal according to channel quality measurement information of the second antenna transmitted by the terminal.

Optionally, as another embodiment, the memory 560 may further store an instruction for enabling the processor 550 to execute the following procedure:
selecting, according to the quality of the channel between the first antenna and the terminal and the quality of the channel between the second antenna and the terminal, the antenna with higher channel quality from the first antenna and the second antenna to transmit a signal to the terminal and/or receive a signal transmitted by the terminal, or determining to use the first antenna and the second antenna to transmit a signal to the terminal and/or receive a signal transmitted by the terminal.

Optionally, as another embodiment, the memory 560 may further store an instruction for enabling the processor 550 to execute the following procedure:
acquiring time-frequency resource information of an antenna system of a neighboring cell, where the time-frequency resource information is information about a time-frequency resource used when a third antenna and/or a fourth antenna of the antenna system of the neighboring cell transmits and/or receives a signal; and determining, according to the time-frequency resource information, a time-frequency resource preferentially used when the first antenna and/or the second antenna of the antenna system transmits and/or receives a signal.

For example, in the case of single-frequency networking, the antenna system of the cell may periodically acquire, by using a first interface, information about a time-frequency resource used by the antenna system of the neighboring cell. Generally, the first interface is directly connected to the base station, and the base station is connected to other base stations by using cables, thereby implementing exchange of time-frequency resource information. In this way, the first antenna (an antenna corresponding to far-end coverage) of the cell can preferentially use a time-frequency resource that is used by the fourth antenna of the neighboring cell (an antenna corresponding to near-end coverage), and the second antenna (an antenna corresponding to near-end coverage) of the cell can preferentially use a time-frequency resource that is used by the third antenna (an antenna corresponding to far-end coverage) of the neighboring cell, thereby reducing interference between cells, and further increasing a capacity of a communications system.

Optionally, as another embodiment, the memory 560 may further store an instruction for enabling the processor 550 to execute the following procedure:
when a difference between the channel quality of the first antenna and the channel quality of the second antenna is greater than a threshold, selecting the antenna with higher channel quality from the first antenna and the second antenna to transmit a signal to the terminal and/or receive a signal transmitted by the terminal.

Optionally, as another embodiment, the memory 560 may further store an instruction for enabling the processor 550 to execute the following procedure:
when a difference between the channel quality of the first antenna and the channel quality of the second antenna is less than a threshold, determining to use the first antenna and the second antenna collaboratively to transmit a signal to the terminal and/or receive a signal transmitted by the terminal.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

It should be understood that, the term "and/or" in the embodiments of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An antenna system (10), comprising:
a first antenna subsystem (11), comprising a first antenna (111) and a first remote radio unit (112), RRU, wherein the first antenna (111) is connected to the first RRU (112) by using a feeder;
a second antenna subsystem (12), comprising a second antenna (121) and a second RRU (122), wherein the second antenna (121) is connected to the second RRU (122) by using a feeder, a vertical beam width of the second antenna (121) is greater than a vertical beam width of the first antenna (111), a downtilt angle of the second antenna (121) is greater than a downtilt angle of the first antenna (111), and the second antenna (121) and the first antenna (111) transmit and/or receive signals by using a carrier of same frequency, wherein the first antenna (111) is configured for wide area coverage, and the second antenna (121) is configured for signal enhancement in a near-end area of a base station; and
a baseband processing pool (13), separately connected to the first RRU (112) and the second RRU (122) by using cables, and configured to determine, according to quality of a channel between the first antenna (111) and a terminal and quality of a channel between the second antenna (121) and the terminal, to use the first antenna (111) and/or the second antenna (121) to transmit a signal to the terminal and/or receive a signal transmitted by the terminal;
wherein the baseband processing pool (13) is further configured to determine the quality of the channel between the first antenna (111) and the terminal according to channel quality measurement information of the first antenna (111) transmitted by the terminal, and determine the quality of the channel between the second antenna (121) and the terminal according to channel quality measurement information of the second antenna (121) transmitted by the terminal.

2. The antenna system (10) according to claim 1, wherein the baseband processing pool (13) is further configured to select, according to the quality of the channel between the first antenna (111) and the terminal and the quality of the channel between the second antenna (121) and the terminal, the antenna with higher channel quality from the first antenna (111) and the second antenna (121) to transmit a signal to the terminal and/or receive a signal transmitted by the terminal, or determine to use the first antenna (111) and the second antenna (121) collaboratively to transmit a signal to the terminal and/or receive a signal transmitted by the terminal.

3. The antenna system (10) according to claim 1, wherein transmit power of the second antenna (121) is less than transmit power of the first antenna (111).

4. The antenna system (10) according to claim 1, wherein the first antenna subsystem (11) and the second antenna subsystem (12) share a radome.

5. A processing method for an antenna system (10), wherein the antenna system (10) comprises: a first antenna subsystem (11), comprising a first antenna (111) and a first remote radio unit, RRU (112), wherein the first antenna (111) is connected to the first RRU (112) by using a feeder; a second antenna subsystem (12), comprising a second antenna (121) and a second RRU (122), wherein the second antenna (121) is connected to the second RRU (122) by using a feeder, a vertical beam width of the second antenna (121) is greater than a vertical beam width of the first antenna (111), a downtilt angle of the second antenna (121) is greater than a downtilt angle of the first antenna (111), and the second antenna (121) and the first antenna (111) transmit and/or receive signals by using a carrier, wherein the first antenna (111) is configured for wide area coverage, and the second antenna (121) is configured for signal enhancement in a near-end area of a base station; and a baseband processing pool (13), separately connected to the first RRU (112) and the second RRU (122) by using cables, and the method comprises:
determining (410), by the baseband processing pool (13), quality of a channel between the first antenna (111) and a terminal and quality of a channel between the second antenna (121) and the terminal; and
determining (420), by the baseband processing pool (13) according to the quality of the channel between the first antenna (111) and the terminal and the quality of the channel between the second antenna (121) and the terminal, to use the first antenna (111) and/or the second antenna (121) to transmit a signal to the terminal and/or receive a signal transmitted by the terminal;
wherein the determining (410), by the baseband processing pool (13), quality of a channel between the first antenna (111) and a terminal and quality of a channel between the second antenna (121) and the terminal comprises:
determining, by the baseband processing pool (13), the quality of the channel between the first antenna (111) and the terminal according to channel quality measurement information of the first antenna (111) transmitted by the terminal, and determining the quality of the channel between the second antenna (121) and the terminal according to channel quality measurement information of the second antenna (121) transmitted by the terminal.

6. The method according to claim 5, wherein the determining (420), by the baseband processing pool (13) according to the quality of the channel between the first antenna (111) and the terminal and the quality of the channel between the second antenna (121) and the terminal, to use the first antenna (111) and/or the second antenna (121) to transmit a signal to the terminal and/or receive a signal transmitted by the terminal comprises:
selecting, by the baseband processing pool (13) according to the quality of the channel between the first antenna (111) and the terminal and the quality of the channel between the second antenna (121)and the terminal, the antenna with higher channel quality from the first antenna (111) and the second antenna (121) to transmit a signal to the terminal and/or receive a signal transmitted by the terminal, or determining to use the first antenna (111) and the second antenna (121) collaboratively to transmit a signal to the terminal and/or receive a signal transmitted by the terminal.

7. The method according to claim 6, wherein the selecting the antenna with higher channel quality from the first antenna (111) and the second antenna (121) to transmit a signal to the terminal and/or receive a signal transmitted by the terminal comprises:
when a difference between the quality of the channel between the first antenna (111) and the terminal and the quality of the channel between the second antenna (121) and the terminal is greater than a threshold, selecting the antenna with higher channel quality from the first antenna (111) and the second antenna (121) to transmit a signal to the terminal and/or receive a signal transmitted by the terminal.

8. The method according to claim 6, wherein the determining to use the first antenna (111) and the second antenna (121) collaboratively to transmit a signal to the terminal and/or receive a signal transmitted by the terminal comprises:
when a difference between the quality of the channel between the first antenna (111) and the terminal and the quality of the channel between the second antenna (121) and the terminal is less than a threshold, determining to use the first antenna and the second antenna collaboratively to transmit a signal to the terminal and/or receive a signal transmitted by the terminal.

## Patentansprüche

1. Antennensystem (10), welches Folgendes umfasst:
ein erstes Antennen-Subsystem (11), das eine erste Antenne (111) und eine erste abgesetzte Funkeinheit (RRU - *Remote Radio Unit)* (112) umfasst, wobei die erste Antenne (111) durch Verwendung einer Zuführung mit der ersten RRU (112) verbunden ist;
ein zweites Antennen-Subsystem (12), das eine zweite Antenne (121) und eine zweite RRU (122) umfasst, wobei die zweite Antenne (121) durch Verwendung einer Zuführung mit der zweiten RRU (122) verbunden ist, eine vertikale Strahlbreite der zweiten Antenne (121) größer als eine vertikale Strahlbreite der ersten Antenne (111) ist, ein Abwärtsneigungswinkel der zweiten Antenne (121) größer als ein Abwärtsneigungswinkel der ersten Antenne (111) ist, und die zweite Antenne (121) und die erste Antenne (111) Signale durch Verwendung eines Trägers der gleichen Frequenz senden und/oder empfangen, wobei die erste Antenne (111) für eine Weitbereichsabdeckung konfiguriert ist und die zweite Antenne (121) für eine Signalverstärkung in einem Nahendbereich einer Basisstation konfiguriert ist; und
einen Basisband-Verarbeitungspool (13), der durch Verwendung von Kabeln getrennt mit der ersten RRU (112) und der zweiten RRU (122) verbunden ist und zum Festlegen, gemäß einer Qualität eines Kanals zwischen der ersten Antenne (111) und einem Terminal und einer Qualität eines Kanals zwischen der zweiten Antenne (121) und dem Terminal, der Verwendung der ersten Antenne (111) und/oder der zweiten Antenne (121) zum Senden eines Signals an das Terminal und/oder Empfangen eines Signals, das durch das Terminal gesendet wird, konfiguriert ist;
wobei der Basisband-Verarbeitungspool (13) ferner zum Bestimmen der Qualität des Kanals zwischen der ersten Antenne (111) und dem Terminal gemäß Kanalqualitätsmessungsinformationen der ersten Antenne (111), die durch das Terminal gesendet werden, und Bestimmen der Qualität des Kanals zwischen der zweiten Antenne (121) und dem Terminal gemäß Kanalqualitätsmessungsinformationen der zweiten Antenne (121), die durch das Terminal gesendet werden, konfiguriert ist.

2. Antennensystem (10) nach Anspruch 1, wobei der Basisband-Verarbeitungspool (13) ferner zum Auswählen, gemäß der Qualität des Kanals zwischen der ersten Antenne (111) und dem Terminal und der Qualität des Kanals zwischen der zweiten Antenne (121) und dem Terminal, der Antenne mit einer höheren Kanalqualität aus der ersten Antenne (111) und der zweiten Antenne (121) zum Senden eines Signals an das Terminal und/oder Empfangen eines Signals, das durch das Terminal gesendet wird, oder Festlegen der gemeinsamen Verwendung der ersten Antenne (111) und der zweiten Antenne (121) zum Senden eines Signals an das Terminal und/oder Empfangen eines Signals, das durch das Terminal gesendet wird, konfiguriert ist.

3. Antennensystem (10) nach Anspruch 1, wobei eine Sendeleistung der zweiten Antenne (121) geringer als eine Sendeleistung der ersten Antenne (111) ist.

4. Antennensystem (10) nach Anspruch 1, wobei das erste Antennen-Subsystem (11) und das zweite Antennen-Subsystem (12) ein Radom gemeinsam nutzen.

5. Verarbeitungsverfahren für ein Antennensystem (10), wobei das Antennensystem (10) Folgendes umfasst: ein erstes Antennen-Subsystem (11), das eine erste Antenne (111) und eine erste abgesetzte Funkeinheit (RRU - *Remote Radio Unit)* (112) umfasst, wobei die erste Antenne (111) durch Verwendung einer Zuführung mit der ersten RRU (112) verbunden ist; ein zweites Antennen-Subsystem (12), das eine zweite Antenne (121) und eine zweite RRU (122) umfasst, wobei die zweite Antenne (121) durch Verwendung einer Zuführung mit der zweiten RRU (122) verbunden ist, eine vertikale Strahlbreite der zweiten Antenne (121) größer als eine vertikale Strahlbreite der ersten Antenne (111) ist, ein Abwärtsneigungswinkel der zweiten Antenne (121) größer als ein Abwärtsneigungswinkel der ersten Antenne (111) ist, und die zweite Antenne (121) und die erste Antenne (111) Signale durch Verwendung eines Trägers senden und/oder empfangen, wobei die erste Antenne (111) für eine Weitbereichsabdeckung konfiguriert ist und die zweite Antenne (121) für eine Signalverstärkung in einem Nahendbereich einer Basisstation konfiguriert ist; und einen Basisband-Verarbeitungspool (13), der durch Verwendung von Kabeln getrennt mit der ersten RRU (112) und der zweiten RRU (122) verbunden ist, und das Verfahren Folgendes umfasst:
Bestimmen (410), durch den Basisband-Verarbeitungspool (13), einer Qualität eines Kanals zwischen der ersten Antenne (111) und einem Terminal und einer Qualität eines Kanals zwischen der zweiten Antenne (121) und dem Terminal; und
Festlegen (420), durch den Basisband-Verarbeitungspool (13), gemäß der Qualität des Kanals zwischen der ersten Antenne (111) und dem Terminal und der Qualität des Kanals zwischen der zweiten Antenne (121) und dem Terminal, der Verwendung der ersten Antenne (111) und/oder der zweiten Antenne (121) zum Senden eines Signals an das Terminal und/oder Empfangen eines Signal, das durch das Terminal gesendet wird;
wobei das Bestimmen (410), durch den Basisband-Verarbeitungspool (13), einer Qualität eines Kanals zwischen der ersten Antenne (111) und einem Terminal und einer Qualität eines Kanals zwischen der zweiten Antenne (121) und dem Terminal Folgendes umfasst:
Bestimmen, durch den Basisband-Verarbeitungspool (13), der Qualität des Kanals zwischen der ersten Antenne (111) und dem Terminal gemäß Kanalqualitätsmessungsinformationen der ersten Antenne (111), die durch das Terminal gesendet werden, und Bestimmen der Qualität des Kanals zwischen der zweiten Antenne (121) und dem Terminal gemäß Kanalqualitätsmessungsinformationen der zweiten Antenne (121), die durch das Terminal gesendet werden.

6. Verfahren nach Anspruch 5, wobei das Festlegen (420), durch den Basisband-Verarbeitungspool (13), gemäß der Qualität des Kanals zwischen der ersten Antenne (111) und dem Terminal und der Qualität des Kanals zwischen der zweiten Antenne (121) und dem Terminal, der Verwendung der ersten Antenne (111) und/oder der zweiten Antenne (121) zum Senden eines Signals an das Terminal und/oder Empfangen eines Signals, das durch das Terminal gesendet wird, Folgendes umfasst: Auswählen, durch den Basisband-Verarbeitungspool (13), gemäß der Qualität des Kanals zwischen der ersten Antenne (111) und dem Terminal und der Qualität des Kanals zwischen der zweiten Antenne (121) und dem Terminal, der Antenne mit einer höheren Kanalqualität aus der ersten Antenne (111) und der zweiten Antenne (121) zum Senden eines Signals an das Terminal und/oder Empfangen eines Signals, das durch das Terminal gesendet wird, oder Festlegen der gemeinsamen Verwendung der ersten Antenne (111) und der zweiten Antenne (121) zum Senden eines Signals an das Terminal und/oder Empfangen eines Signals, das durch das Terminal gesendet wird.

7. Verfahren nach Anspruch 6, wobei das Auswählen der Antenne mit einer höheren Kanalqualität aus der ersten Antenne (111) und der zweiten Antenne (121) zum Senden eines Signals an das Terminal und/oder Empfangen eines Signals, das durch das Terminal gesendet wird, Folgendes umfasst:
wenn eine Differenz zwischen der Qualität des Kanals zwischen der ersten Antenne (111) und dem Terminal und der Qualität des Kanals zwischen der zweiten Antenne (121) und dem Terminal größer als eine Schwelle ist, Auswählen der Antenne mit einer höheren Kanalqualität aus der ersten Antenne (111) und der zweiten Antenne (121) zum Senden eines Signals an das Terminal und/oder Empfangen eines Signals, das durch das Terminal gesendet wird.

8. Verfahren nach Anspruch 6, wobei das Festlegen der gemeinsamen Verwendung der ersten Antenne (111) und der zweiten Antenne (121) zum Senden eines Signals an das Terminal und/oder Empfangen eines Signals, das durch das Terminal gesendet wird, Folgendes umfasst:
wenn eine Differenz zwischen der Qualität des Kanals zwischen der ersten Antenne (111) und dem Terminal und der Qualität des Kanals zwischen der zweiten Antenne (121) und dem Terminal kleiner als eine Schwelle ist, Festlegen der gemeinsamen Verwendung der ersten Antenne und der zweiten Antenne zum Senden eines Signals an das Terminal und/oder Empfangen eines Signals, das durch das Terminal gesendet wird.

## Revendications

1. Système d'antenne (10), comprenant :
un premier sous-système d'antenne (11), comprenant une première antenne (111) et une première unité radio distante (112), RRU, la première antenne (111) étant reliée à la première RRU (112) au moyen d'une ligne d'alimentation ;
un deuxième sous-système d'antenne (12), comprenant une deuxième antenne (121) et une deuxième RRU (122), la deuxième antenne (121) étant reliée à la deuxième RRU (122) au moyen d'une ligne d'alimentation, une largeur de faisceau vertical de la deuxième antenne (121) étant supérieure à une largeur de faisceau vertical de la première antenne (111), un angle d'inclinaison vers le bas de la deuxième antenne (121) étant supérieur à un angle d'inclinaison vers le bas de la première antenne (111), et la deuxième antenne (121) et la première antenne (111) envoyant et/ou recevant des signaux en utilisant une porteuse de même fréquence, la première antenne (111) étant conçue pour la couverture de zone étendue, et la deuxième antenne (121) étant conçue pour l'amélioration de signal dans une zone d'extrémité proche d'une station de base ; et
un ensemble de traitement en bande de base (13), relié séparément à la première RRU (112) et à la deuxième RRU (122) au moyen de câbles, et conçu pour décider, d'après la qualité d'un canal existant entre la première antenne (111) et un terminal et la qualité d'un canal existant entre la deuxième antenne (121) et le terminal, d'utiliser la première antenne (111) et/ou la deuxième antenne (121) pour envoyer un signal au terminal et/ou recevoir un signal émis par le terminal ;
l'ensemble de traitement en bande de base (13) étant également conçu pour déterminer la qualité du canal existant entre la première antenne (111) et le terminal d'après des informations de mesure de qualité de canal de la première antenne (111) envoyées par le terminal, et déterminer la qualité du canal existant entre la deuxième antenne (121) et le terminal d'après des informations de mesure de qualité de canal de la deuxième antenne (121) émises par le terminal.

2. Système d'antenne (10) selon la revendication 1, dans lequel l'ensemble de traitement en bande de base (13) est également conçu pour sélectionner, d'après la qualité du canal existant entre la première antenne (111) et le terminal et la qualité du canal existant entre la deuxième antenne (121) et le terminal, parmi la première antenne (111) et la deuxième antenne (121), celle des deux qui a la qualité de canal la plus élevée pour envoyer un signal au terminal et/ou recevoir un signal envoyé par le terminal, ou décider d'utiliser conjointement la première antenne (111) et la deuxième antenne (121) pour envoyer un signal au terminal et/ou recevoir un signal envoyé par le terminal.

3. Système d'antenne (10) selon la revendication 1, dans lequel la puissance d'émission de la deuxième antenne (121) est inférieure à la puissance d'envoi de la première antenne (111).

4. Système d'antenne (10) selon la revendication 1, dans lequel le premier sous-système d'antenne (11) et le deuxième sous-système d'antenne (12) partagent un radôme.

5. Procédé de traitement destiné à un système d'antenne (10), le système d'antenne (10) comprenant: un premier sous-système d'antenne (11), comprenant une première antenne (111) et une première unité radio distante, RRU (112), la première antenne (111) étant reliée à la première RRU (112) au moyen d'une ligne d'alimentation ; un deuxième sous-système d'antenne (12), comprenant une deuxième antenne (121) et une deuxième RRU (122), la deuxième antenne (121) étant reliée à la deuxième RRU (122) au moyen d'une ligne d'alimentation, une largeur de faisceau vertical de la deuxième antenne (121) étant supérieure à une largeur de faisceau vertical de la première antenne (111), un angle d'inclinaison vers le bas de la deuxième antenne (121) étant supérieur à un angle d'inclinaison vers le bas de la première antenne (111), et la deuxième antenne (121) et la première antenne (111) envoyant et/ou recevant des signaux en utilisant une porteuse, la première antenne (111) étant conçue pour la couverture de zone étendue, et la deuxième antenne (121) étant conçue pour l'amélioration de signal dans une zone d'extrémité proche d'une station de base ; et un ensemble de traitement en bande de base (13), relié séparément à la première RRU (112) et à la deuxième RRU (122) au moyen de câbles, le procédé comprenant les étapes consistant à :
déterminer (410), par l'ensemble de traitement en bande de base (13), la qualité d'un canal existant entre la première antenne (111) et un terminal et la qualité d'un canal existant entre la deuxième antenne (121) et le terminal ; et
décider (420), par l'ensemble de traitement en bande de base (13), d'après la qualité du canal existant entre la première antenne (111) et le terminal et la qualité du canal existant entre la deuxième antenne (121) et le terminal, d'utiliser la première antenne (111) et/ou la deuxième antenne (121) pour envoyer un signal au terminal et/ou recevoir un signal émis par le terminal ;
dans lequel l'étape consistant à déterminer (410), par l'ensemble de traitement en bande de base (13), la qualité d'un canal existant entre la première antenne (111) et un terminal et la qualité d'un canal existant entre la deuxième antenne (121) et le terminal comprend les étapes consistant à :
déterminer, par l'ensemble de traitement en bande de base (13), la qualité du canal existant entre la première antenne (111) et le terminal d'après des informations de mesure de qualité de canal de la première antenne (111) envoyées par le terminal, et
déterminer la qualité du canal existant entre la deuxième antenne (121) et le terminal d'après des informations de mesure de qualité de canal de la deuxième antenne (121) émises par le terminal.

6. Procédé selon la revendication 5, dans lequel l'étape consistant à décider (420), par l'ensemble de traitement en bande de base (13), d'après la qualité du canal existant entre la première antenne (111) et le terminal et la qualité du canal existant entre la deuxième antenne (121) et le terminal, d'utiliser la première antenne (111) et/ou la deuxième antenne (121) pour envoyer un signal au terminal et/ou recevoir un signal envoyé par le terminal comprend l'étape consistant à :
sélectionner, par l'ensemble de traitement en bande de base (13), d'après la qualité du canal existant entre la première antenne (111) et le terminal et la qualité du canal existant entre la deuxième antenne (121) et le terminal, parmi la première antenne (111) et la deuxième antenne (121), celle des deux qui a la qualité de canal la plus élevée pour envoyer un signal au terminal et/ou recevoir un signal envoyé par le terminal, ou décider d'utiliser conjointement la première antenne (111) et la deuxième antenne (121) pour envoyer un signal au terminal et/ou recevoir un signal envoyé par le terminal.

7. Procédé selon la revendication 6, dans lequel l'étape consistant à sélectionner, parmi la première antenne (111) et la deuxième antenne (121), celle des deux qui a la qualité de canal la plus élevée pour envoyer un signal au terminal et/ou recevoir un signal envoyé par le terminal comprend l'étape consistant à :
lorsqu'une différence entre la qualité du canal existant entre la première antenne (111) et le terminal et la qualité du canal existant entre la deuxième antenne (121) et le terminal est supérieure à un seuil, sélectionner, parmi la première antenne (111) et la deuxième antenne (121), celle des deux qui a la qualité de canal la plus élevée pour envoyer un signal au terminal et/ou recevoir un signal envoyé par le terminal.

8. Procédé selon la revendication 6, dans lequel l'étape consistant à décider d'utiliser conjointement la première antenne (111) et la deuxième antenne (121) pour envoyer un signal au terminal et/ou recevoir un signal envoyé par le terminal comprend l'étape consistant à :
lorsqu'une différence entre la qualité du canal existant entre la première antenne (111) et le terminal et la qualité du canal existant entre la deuxième antenne (121) et le terminal est inférieure à un seuil, décider d'utiliser conjointement la première antenne et la deuxième antenne pour envoyer un signal au terminal et/ou recevoir un signal envoyé par le terminal.
